## Europäisches Patentamt

(19) **European Patent Office**

**Office européen des brevets**

(11) Numéro de publication: **0 213 020**
**B1**

(12) **FASCICULE DE BREVET EUROPÉEN**

(45) Date de publication du fascicule du brevet:
**21.09.88**

(21) Numéro de dépôt: **86401659.7**

(22) Date de dépôt: **24.07.86**

(51) Int. Cl.⁴: **B 60 G 17/04**

(54) **Suspension hydropneumatique de véhicule automobile comportant des clapets anti-affaissement.**

(30) Priorité: **24.07.85 FR 8511570**

(43) Date de publication de la demande:
**04.03.87 Bulletin 87/10**

(45) Mention de la délivrance du brevet:
**21.09.88 Bulletin 88/38**

(84) Etats contractants désignés:
**DE GB IT**

(56) Documents cité:
**FR-A-1 274 104**
**FR-A-2 391 098**
**US-A-3 938 823**
**US-A-3 945 664**
**US-A-4 145 073**

**PATENTS ABSTRACTS OF JAPAN, vol. 4, no. 29 (M-2) 511 , 14 mars 1980; & JP-A-55 4268 (MITSUBISHI JUKOGYO K.K.) 12-01-1980**

(73) Titulaire: **AUTOMOBILES PEUGEOT, 75, avenue de la Grande Armée, F-75116 Paris (FR)**
Titulaire: **AUTOMOBILES CITROEN, 62 Boulevard Victor- Hugo, F-92200 Neuilly- sur- Seine (FR)**

(72) Inventeur: **Richard, Denis, 65, rue Mirabeau, F-94600 Choisy- Le- Roi (FR)**

(74) Mandataire: **Boivin, Claude, 9, rue Edouard-Charton, F-78000 Versailles (FR)**

## Description

La présente invention concerne une suspension hydropneumatique de véhicule automobile du type comprenant un accumulateur principal alimenté à une pression régulée par une pompe haute pression, un vérin de suspension coopérant avec un accumulateur hydropneumatique pour chacune des roues du véhicule, un correcteur de hauteur pour chacun des essieux et propre à relier selon la charge de l'essieu les vérins de suspension soit à l'accumulateur principal soit à l'échappement.

On sait que les véhicules à suspension hydropneumatique sont avantageusement munis d'un circuit de freinage coopérant avec le circuit de la suspension. Ce circuit de freinage comporte un doseur commandé par la pédale de frein et comportant un premier circuit alimenté directement par l'accumulateur principal et agissant sur les freins avant et un deuxième circuit relié aux accumulateurs de l'essieu arrière et agissant sur les freins arrière, de telle sorte que le couple de freinage arrière soit proportionnel à la charge de l'essieu. Avantageusement les circuits de suspension et de freinage sont munis d'une vanne de priorité, agencée de telle sorte que, lorsque la pression de l'accumulateur principal descend en dessous d'un seuil, l'accumulateur principal soit isolé du circuit de la suspension afin de réserver, par mesure de sécurité, la pression au circuit de freinage.

On sait d'autre part que les circuits de suspension et de freinage des véhicules à suspension hydropneumatique comportent des fuites et qu'après l'arrêt du moteur et de la pompe haute pression qu'alimente l'accumulateur principal, la pression baisse dans les vérins de suspension et la caisse du véhicule vient reposer sur ses butées.

L'affaissement du véhicule pendant l'arrêt du moteur présente des inconvénients, notamment, l'obligation d'attendre la remontée en pression des vérins de suspension, au démarrage, et le fait que les parechocs du véhicule peuvent venir reposer soit sur le trottoir soit sur le pare-chocs des véhicules adjacents.

La présente invention a pour objet une suspension hydropneumatique du type ci-dessus qui évite l'affaissement du véhicule.

Cette suspension est caractérisée en ce qu'elle comporte pour chaque essieu un clapet anti-affaissement interposé entre le vérin de suspension de cet essieu et le correcteur de hauteur correspondant, et des moyens sensibles à la pression de l'accumulateur principal pour ouvrir et fermer ce clapet.

Lors de l'arrêt du moteur, donc de la pompe haute pression, la pression dans l'accumulateur principal baisse, ce qui assure la fermeture des clapets antiaffaissement; les vérins de suspension sont ainsi isolés des correcteurs de hauteur et du circuit de freinage et restent ainsi sous pression.

Le circuit de freinage arrière comporte de préférence un accumulateur hydropneumatique de sécurité qui alimente le circuit quand les accumulateurs de suspension arrière sont isolés de l'accumulateur principal.

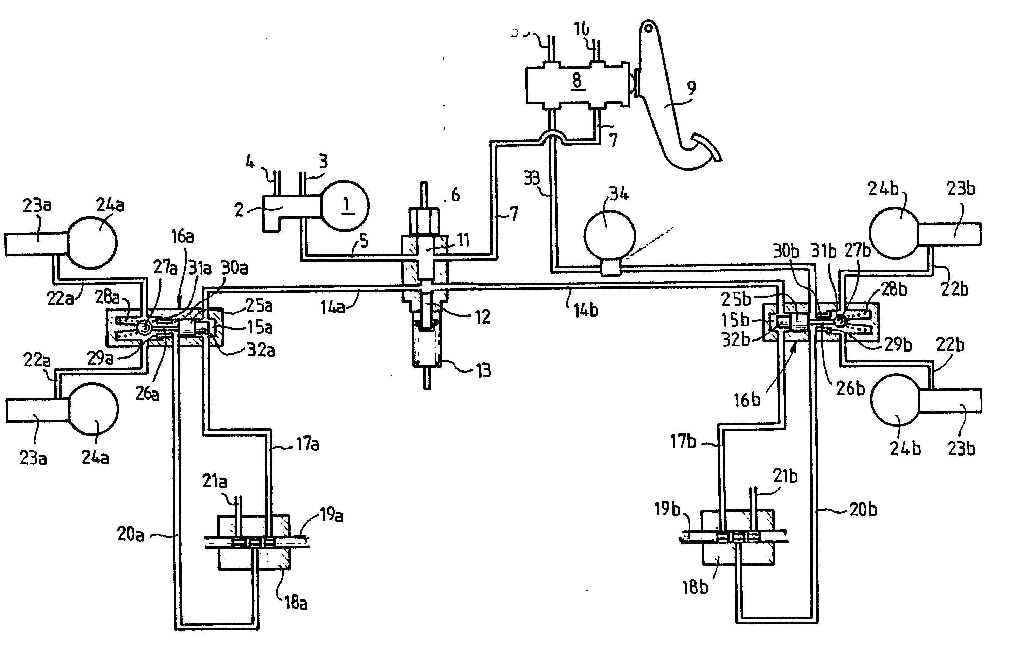

On a décrit ci-après, à titre d'exemple non limitatif, un mode de réalisation de la suspension selon l'invention avec référence à la Figure Unique du dessin qui est un schéma de cette suspension.

On voit au dessin un accumulateur principal 1 équipé d'un conjoncteur-disjoncteur 2. Ce dernier est relié par des conduits 3 et 4 à une pompe haute pression non représentée et à un réservoir également non représenté; il assure le maintien d'une pression constante dans l'accumulateur principal 1.

L'accumulateur 1 est relié par un conduit 5 à une vanne de priorité 6 elle-même reliée par un conduit 7 à un doseur 8 qui est commandé par la pédale de freinage 9 et détermine en fonction de la position de cette pédale la pression dans le circuit de freinage avant 10.

Les conduits 5 et 7 débouchent tous deux dans un alésage 11 de la vanne 6 et sont en permanence en communication l'un avec l'autre.

Dans l'alésage 11 se trouve un tiroir 12 qui est soumis d'une part à l'action de la pression dans les conduits 5 et 7 et d'autre part à celle d'un ressort antagoniste 13. Ce tiroir est mobile devant des orifices reliés par des conduits 14a et 14b respectivement aux circuits de suspension avant et arrière, de manière que ces conduits soient reliés à l'accumulateur principal 1 quand la pression dans cet accumulateur atteint un certain seuil corrspondant au fonctionnement de la pompe, et isolés dudit accumulateur quand la valeur de cette pression est inférieure à ce seuil.

Chacun des conduits 14a et 14b est relié à une chambre 15a ou 15b d'un clapet anti-affaissement 16a ou 16b. Cette chambre est elle-même reliée par un conduit 17a ou 17b à un correcteur de hauteur 18a ou 18b comportant un tiroir 19a ou 19b. Des moyens non représentés sensibles à la hauteur de chaque essieu, agissent sur les tiroirs 19a et 19b de manière à relier des conduits 20a et 20b qui alimentent les suspensions des essieux, soit à l'accumulateur principal par les conduits 14a et 14b, soit au réservoir par des conduits 21a et 21b.

Les conduits 20a et 20b peuvent être reliés par l'intermédiaire des clapets anti-affaissement 16a et 16b et des conduits 22a et 22b respectivement aux vérins de suspension avant 23a et arrière 23b, ces vérins étant munis d'accumulateurs hydropneumatiques 24a et 24b.

Dans la chambre 15a ou 15b des clapets anti-affaissement 16a et 16b est mobile un tiroir 25a ou 25b sur lequel agit la pression régnant dans le circuit 14a ou 14b. Ce tiroir est solidaire d'une tige 26a ou 26b qui agit sur une bille 27a ou 27b ou sur un pointeau muni d'un joint d'étanchéité, à l'encontre d'un ressort 28a ou 28b, pour écarter on non la bille d'un siège 29a ou 29b. Cette bille forme un clapet qui sépare une chambre 30a ou 30b dans laquelle débouche le conduit 20a ou 20b d'une chambre 31a ou 31b dans laquelle débouchent les conduits 22a ou 22b. Quand la pression dans les chambres 15a et 15b descend en dessous d'un certain seuil, les billes 27a et 27b viennent reposer sur leur siège 29a ou 29b en isolant des conduits 20a et 20b les conduits 22a et 22b conduisant aux vérins de suspension. Le tiroir 25a ou 25b comporte un prolongement 32a ou 32b de diamètre réduit, d'une valeur calibrée par exemple de 0,05 mm, qui se trouve vis-à-vis des orifices par lesquels débouchent les conduits 14a - 17a ou 14b - 17b. Ce prolongement permet l'écoulement du fluide tout en freinant le tiroir pendant les à-coups de pression de suspension, et évite ainsi une fermeture intempestive du clapet.

Dans la chambre 30b du clapet anti-affaissement arrière 16b débouche une conduite 33 qui est équipée d'un accumulateur hydropneumatique 34 et relie le clapet au doseur 8. Celui-ci relie la conduite 33 au circuit de freinage arrière 35 en fonction de la position de la pédale 9.

Lorsque le moteur du véhicule et la pompe haute pression sont à l'arrêt, la pression baisse dans l'accumulateur principal 1. Sous l'effet du ressort 13, le tiroir 12 de la vanne de priorité 6 se déplace et vient interrompre la communication entre la conduite 5 et les conduits 14a et 14b. L'accumulateur 1 n'alimente plus que le circuit de freinage avant par l'intermédiaire des conduits 5 et 7.

En raison des fuites dans les correcteurs de hauteur 18a et 18b et dans le doseur 8, la pression baisse dans les vérins de suspension et dans les conduits 14a et 14b. Les clapets anti-affaissement 16a et 16b se mettent en position de fermeture, sous l'effet de leurs ressorts 28a et 28b. Les vérins de suspension 23a et 23b sont isolés des correcteurs de hauteur et du doseur et l'affaissement du véhicule cesse. Le circuit de freinage avant reste alimenté par l'intermédiaire de la vanne de priorité 6; de son côté, le circuit de freinage arrière reste alimenté par l'accumulateur 34.

## Revendications

1. Suspension hydro-pneumatique de véhicule automobile du type comprenant un accumulateur principal (1) alimenté par une pression régulée par une pompe à haute pression, un vérin de suspension (23a ou 23b) coopérant avec un accumulateur hydro-pneumatique (24a ou 24b) pour chacune des roues du véhicule, un correcteur de hauteur (18a ou 18b) pour chacun des essieux et propre à relier selon la charge de l'essieu les vérins de suspension correspondants (23a ou 23b) soit à l'accumulateur principal (1), soit à l'échappement, caractérisée en ce qu'elle comporte pour chaque essieu un clapet anti-affaissement (16a ou 16b) interposé entre les vérins de suspension (23a ou 23b) de cet essieu et le correcteur de hauteur (18a ou 18b) correspondant, et des moyens sensibles à la pression de l'accumulateur principal (1) pour ouvrir et fermer ce clapet.

2. Suspension selon la revendication 1, caractérisée en ce que le clapet anti-affaissement (16a ou 16b) comporte une chambre (15a ou 15b) reliée à l'accumulateur principal (1) et dans laquelle règne une pression agissant sur un tiroir (25a ou 25b), muni d'une tige (26a ou 26b) et propre à déplacer une bille (27a ou 27b) ou un pointeau muni d'un joint d'étanchéité, à l'encontre d'un ressort (28a ou 28b) de manière à ouvrir ou fermer selon la pression de l'accumulateur principal (1), la liaison entre le correcteur de hauteur (18a ou 18b) et les vérins de l'essieu.

3. Suspension selon la revendication 2, caractérisée en ce que le tiroir (25a ou 25b) comporte un prolongement (22a ou 22b) de diamètre réduit calibré, qui étrangle la liaison avec l'accumulateur principal (1) et freine le clapet pendant les débattements de la suspension.

4. Suspension selon la revendication 1, coopérant avec un circuit de freinage relié au même accumulateur principal et comprenant un circuit de freinage "avant" directement relié à l'accumulateur principal et un circuit de freinage "arrière" relié aux accumulateurs de l'essieu arrière, caractérisée en ce qu'elle comporte dans le circuit d'alimentation du freinage arrière un accumulateur hydro-pneumatique de sécurité (34) propre à alimenter le circuit de freinage arrière quand le clapet anti-affaissement (16b) de l'essieu arrière est fermé.

5. Suspension selon l'une des revendications 1 à 4, caractérisée en ce qu'elle comporte une vanne de priorité (6) sensible à la pression de l'accumulateur principal (1) et propre à isoler en dessous d'un seuil de pression les circuits de suspension de l'accumulateur principal.

## Patentansprüche

1. Hydropneumatische Federung für Kraftfahrzeuge mit einem Hauptspeicher (1), der von einer Hochdruckpumpe mit einem eingestellten Druck versorgt wird, mit einem Federbein (23a oder 23b), das mit einem hydropneumatischen Speicher (24a oder 24b) für jedes Rad des Fahrzeuges zusammenwirkt, mit einem Niveauregler (18a oder 18b) für jede der Achsen, der geeignet ist, entsprechend der Belastung der Achse die zugeordneten Federbeine (23a oder 23b) entweder mit dem Hauptspeicher (1) oder mit dem Auslaß zu verbinden, dadurch gekennzeichnet, daß sie für jede Achse ein Gegendurchhangungsventil (16a oder 16b), das zwischen den Federbeinen (23a oder 23b) dieser Achse und dem zugeordneten Niveauregler (18a oder 18b) angeordnet ist, und eine Einrichtung aufweist, die auf den Druck des Hauptspeichers (1) anspricht, um dieses Ventil zu öffnen und zu schließen.

2. Federung nach Anspruch 1, dadurch gekennzeichnet, daß das Gegendurchhangungsventil (16a oder 16b) eine Kammer (15a oder 15b) aufweist, die mit dem Hauptspeicher (1) verbunden ist und in der ein auf einen Schieber (25a oder 25b) einwirkender Druck herrscht, wobei der Schieber mit einem Schaft (26a oder 26b) versehen und geeignet ist, eine Kugel (27a oder 27b) oder eine mit einer Dichtung versehene Nadel gegen die Kraft einer Feder (28a oder 28b) zu verschieben dergestalt, daß entsprechend dem Druck des Hauptspeichers (1) die Verbindung zwischen dem Niveauregler (18a oder 18b) und den Federbeinen der Achse geöffnet oder geschlossen wird.

3. Federung nach Anspruch 2, dadurch gekennzeichnet, daß der Schieber (25a oder 25b) eine Verlängerung (32a oder 32b) mit reduziertem, kalibriertem Durchmesser aufweist, welche die Verbindung mit dem Hauptspeicher (1) drosselt und das Ventil beim Durchschlagen der Federung abbremst.

4. Federung nach Anspruch 1, welche mit einem an denselben Hauptspeicher angeschlossenen Bremskreis zusamenwirkt und einen Bremskreis "vorn", der direkt an den Hauptspeicher angeschlossen ist, und einen Bremskreis "hinten" aufweist, der mit den Speichern der Hinterachse verbunden ist, dadurch gekennzeichnet, daß sie im Versorgungskreis für die hinteren Bremsen einen hydropneumatischen Sicherheitsspeicher (34) aufweist, der geeignet ist, den hinteren Bremskreis zu versorgen, wenn das Gegendurchhangungsventil (16b) der Hinterachse geschlossen ist.

5. Federung nach einem der Ansprüche 1 bis 4, dadurch gekennzeichnet, daß sie ein vorrangiges Ventil (6) aufweist, das auf den Druck des Hauptspeichers (1) anspricht und geeignet ist, unterhalb einer Druckschwelle die Federungskreise des Hauptspeichers abzusperren.

## Claims

1. Motor vehicle hydropneumatic suspension of the type comprising a main actuator (1) fed at a pressure regulated by a high pressure pump, a suspension actuator (23a or 23b) cooperating with a hydropneumatic accumulator (24a or 24b) for each of the wheels of the vehicle, a height corrector (18a or 18b) for each of the axles and adapted for connecting the corresponding suspension actuators (23a or 23b) either to the main accumulator (1) or to exhaust depending on the axle load, characterized in that it comprises, for each axle, an anti-collapse valve (16a or 16b) inserted between the suspension actuators (23a or 23b) of this axle and the corresponding height corrector (18a or 18b), and means responsive to the pressure of the main accumulator (1) for opening and closing this valve.

2. Suspension according to claim 1, characterized in that the anti-collapse valve (16a or 16b) comprises a chamber (15a or 15b) connected to the main accumulator (1) and in which a pressure prevails acting on a slide (25a or 25b), having a rod (26a or 26b) and adapted for moving a ball (27a or 27b) or a needle valve provided with a seal against a spring (28a or 28b) so as to open or close the connection between the height corrector (18a or 18b) and the actuators of the axle depending on the pressure of the main accumulator (1).

3. Suspension according to claim 2, characterized in that the slide (25a or 25b) comprises an extension (22a or 22b) of reduced calibrated diameter which constricts the connection of the main accumulator (1) and brakes the valve depending on the range of movement of the suspension.

4. Suspension according to claim 1, cooperating with a braking circuit connected to the same main accumulator and comprising a "front" braking circuit connected directly to the main accumulator and a rear braking circuit connected to the accumulators of the rear axle, characterized in that it comprises in the feed circuit for rear breaking a safety hydropneumatic accumulator (34) adapted for feeding the rear braking circuit when the anti-collapse valve (16b) of the rear axle is closed.

5. Suspension according to one of claims 1 to 4, characterized in that it comprises a priority valve (6) responsive to the pressure of the main accumulator (1) and adapted for isolating the suspension circuits from the main accumulator below a pressure threshold.